Europäisches Patentamt

European Patent Office

Office européen des brevets

(19)

(11) Publication number: **0 338 995 B1**

# (12) EUROPEAN PATENT SPECIFICATION

(45) Date of publication of patent specification :
17.07.91 Bulletin 91/29

(51) Int. Cl.⁵ : **A21B 3/07**

(21) Application number : **89830035.5**

(22) Date of filing : **02.02.89**

(54) **Oven with horizontal rotating conveyor.**

(30) Priority : **02.02.88 IT 2056288 U**

(43) Date of publication of application :
**25.10.89 Bulletin 89/43**

(45) Publication of the grant of the patent :
**17.07.91 Bulletin 91/29**

(84) Designated Contracting States :
**AT BE CH DE ES FR GB GR LI LU NL SE**

(56) References cited :
**FR-A- 1 371 601**
**FR-A- 2 345 370**
**FR-A- 2 428 977**
**US-A- 2 889 786**

(73) Proprietor : **RINALDI & CO. S.R.L.**
**Via Dorsale Zona Industriale**
**I-54100 Massa (IT)**

(72) Inventor : **Rinaldi, Giorgio**
**V. Le Roma, 301**
**I-54100 Massa (IT)**

(74) Representative : **Perani, Aurelio et al**
**c/o JACOBACCI-CASETTA & PERANI S.p.A 7,**
**Via Visconti di Modrone**
**I-20122 Milano (IT)**

EP 0 338 995 B1

## Description

This invention relates to an electric oven for baking pizzas, as placed in respective baking tins, on a continuous basis, which oven is of a type comprising a baking chamber accessible through a single opening of said oven, a powered endless conveyor being accessible from outside the oven at a loading area for the pizzas to be baked and at an an unloading area for the baked pizzas, the conveyor comprising horizontal baking tin entraining trays and having coplanar horizontal runs extending longitudinally in said baking chamber and a horizontal baking tin carrying runway extending longitudinally in the baking chamber below the trays of said conveyor. Such an over is known from FR-A-1 371 601.

In order to make continuously pizzas of comparable quality and fragrance to traditional, newly prepared pizzas, additionally to an appropriate setting of such interlinked factors as the temperature and humidity of the oven employed, and the residence time of each pizza inside the oven, an ability to control such factors to suit the size and weight of each pizza to be baked and the nature of the ingredients that went into its preparation is demanded.

Electrically operated baking ovens utilized heretofore for this purpose are essentially of the tunnel type, and although widely utilized, have some well-recognized drawbacks from the engineering and economics standpoints. In fact, a first and most evident drawback is represented by the relatively large size of the oven, even when intended for low to medium outputs.

Another well-recognized drawback is the limited output potential of the oven, which are generally unable to meet peak demands for pizzas, unless made oversize or run in banks with other similar ovens.

It is a primary object of this invention to provide an electric oven for continuously baking pizzas in baking tins, which has such construction and performance characteristics as to overcome the above-noted drawbacks with which the prior art is beset.

This and other objects, to become apparent herein below, are achieved by an electric oven as indicated being characterized in that the conveyor is for transferring a plurality of pizzas placed in respective baking tins into and out of said baking chamber and the runway has end sections extended outwards from the baking chamber through said single opening of the oven, which end sections constitute said pizza loading an unloading areas respectively, there being provided a turntable coplanar with said runway, supported in said loading area in a position such that the path of travel of said conveyor trays overlaps the supporting face of the turntable.

According to a second aspect of the invention, the conveyor trays have a substantially concave sectional profile with the concave side facing in the running direction of the conveyor and adapted to engage a baking tin circumferentially.

Further features and advantages of the invention will be more clearly understood from the following detailed description of an embodiment of an electric oven for continuously baking pizzas, to be taken in conjunction with the accompanying illustrative and non-limitative drawing which shows in perspective a part-sectional view of an electric oven according to the invention.

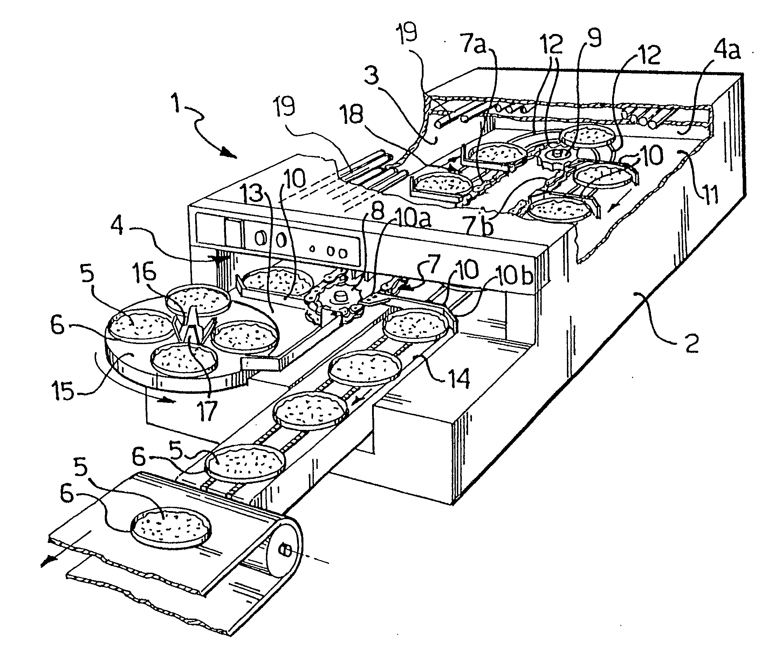

With reference to the drawing view, an electric oven for continuously baking pizzas, generally indicated at 1, comprises a box-type parallelepipedic structure 2 wherein a baking chamber 3 is defined which is accessible from outside said oven through a single front opening 4 thereof.

A powered endless conveyor 18 for transferring pizzas 5 placed in baking tins 6 into and out of said baking chamber 3 comprises an endless chain 7 trained around, and driven by, sprocket wheels 8, 9 having respective vertical axes of rotation. The sprocket wheel 8 is a drive sprocket and located adjacent the front opening 4, whereas the sprocket wheel 9, which serves as a lay sprocket wheel, is supported rotatably at a location close to the bottom wall 4a of the baking chamber 3. The two working runs 7a, 7b of the chain 7 are horizontal in a common plane and extend longitudinally in the baking chamber 3, at a central location therein.

It should be noted that the chain 7 is held under tension by a conventional device, not shown, for taking up expansions resulting from thermal fluctuations within the baking chamber, as well as any backlash due to wear, for instance.

The upper links of the chain 7 have trays 10 attached thereto cantilever-fashion. In particular, these trays are substantially rod-shaped and provided at one end with a foot 10a through which they can be attached to the chain 7, and at the other end, with a sloping section 10b to thereby impart to the tray as a whole a substantially concave shape with the concave side facing in the direction of advance of the conveyor 18.

Within the baking chamber 3, in a position underlying the chain 7, the parallelepipedic structure 2 supports a shelf 11, on which a baking tin-supporting runway 12 is defined, using means which are known per se. This runway 12 spans substantially the entire length of the chain conveyor 7 but for that section thereof which lies adjacent the front opening 4, whereat said runway 12 has two discrete portions, respectively indicated at 13 and 14, which constitute a loading area and an unloading area, respectively, for the pizzas into and out of said oven.

In the loading area 13, the structure 2 supports a turntable 15, comprising a disk with a selected thickness removably keyed to an upright shaft (not shown) and drivingly connected to the power source for the chain conveyor 7. The turntable 15 is substantially coplanar with the baking tin runway 12 and supported in a position that would interfere with the path of travel of the trays 10.

A core piece 16 is removably mounted centrally on the turntable 15 which has a plurality of upstanding portions 17 forming, in cooperation with said core piece, a template for positioning a corresponding plurality of baking tins on said turntable.

The heat source for the baking chamber 3 is quite conventional : it may comprise, for example, a plurality of tubular radiating elements 19 laid longitudinally and supported, in an independent manner of one another, on the bottom and ceiling of the oven 1. Each of said elements may be arranged to be removable from and re-insertable into the baking chamber from the rear of the structure 2 of the oven according to the invention, thereby a possible replacement thereof would involve no disassembling of the structure.

The provision of the turntable 15 in the inlet area for the pizzas in baking tins (5-6) to the oven 1 of this invention, by providing a pizza buffer storage area for the conveyor, results in improved capacity of the oven, ensuring high rates of pizza baking to meet a high short-term demand therefor.

## Claims

1. An electric oven (1) for baking pizzas (5), as placed in baking tins (6), on a continuous basis, comprising a baking chamber (3) accessible through a single opening (4) of the oven, a powered endless conveyor being accessible from outside the oven (1) at a loading area for the pizzas to be baked and at un unloading area for the baked pizzas, the conveyor (18) comprising horizontal baking tin-entraining trays (10) and having coplanar horizontal runs (7a, 7b) extending longitudinally in said baking chamber (3), a horizontal baking tin-carrying runway (12) extending longitudinally in the baking chamber (3) below the trays (10) of said conveyor (18) characterised in that the conveyor is for transferring a plurality of pizzas (5) placed in respective baking tins (6) into and out of said baking chamber (3) and the runway has end sections extended outwards from the baking chamber (3) through said single opening (4) of the oven, which end sections constitute said pizza (5) loading (13) and unloading (14) areas respectively, there being provided a turntable coplanar with said runway (12), supported in said loading area (13) in a position such that the path of travel of the trays (10) of said conveyor (18) overlaps the supporting face of the turntable.

2. An oven according to Claim 1, characterized in that the trays (10) of the conveyor (18) have a substantially concave section profile shape with the concave side facing the running direction of the conveyor (18) and adapted to engage a baking tin (6) circumferentially.

3. An oven according to Claim 2, characterized in that said trays (10) have a substantially rod-shaped structure provided at one end with a foot (10a) whereby they can be attached to the conveyor, and at the other end, with a curving section (10b) in the conveyor running direction.

4. An oven according to Claim 1, characterized in that said turntable comprises a disk (15) supported rotatably in said loading area (13) and defining said supporting face, and a core piece (16) mounted removably at a central location on said disk (15) and having a plurality of upstanding portions (17), said core piece (16) forming substantially a template for positioning a corresponding plurality of baking tins (6) on said disk (15).

## Revendications

1. Four électrique (1) pour cuire en continu des pizzas (5) disposées dans des plats de cuisson (6), comprenant une enceinte de cuisson (3) accessible par une ouverture (4) unique dans le four, un transporteur sans fin entraîné, accessible de l'extérieur du four (1) au niveau d'une zone de chargement pour les pizzas à cuire et d'une zone de déchargement pour les pizzas cuites, le transporteur (18) comprenant des plateaux horizontaux (10) entraînant les plats de cuisson, et comportant des branches horizontales coplanaires (7a, 7b) qui s'étendent longitudinalement dans ladite enceinte de cuisson (3), une piste horizontale (12) portant les plats de cuisson qui s'étend longitudinalement dans l'enceinte de cuisson (3) sous les plateaux (10) dudit transporteur (18), caractérisé en ce que le transporteur est destiné à transférer une pluralité de pizzas (5) placées dans des plats de cuisson (6) respectifs dans ladite enceinte de cuisson (3) et hors de celle-ci, et en ce que la piste comporte des sections qui s'étendent à l'extérieur de l'enceinte de cuisson (3) par ladite ouverture unique (4) du four, ces sections constituant respectivement lesdites zones de chargement (13) et de déchargement (14) des pizzas (5), un plateau tournant disposé dans le même plan que ladite piste (12) étant supporté dans ladite zone de chargement (13) dans une position telle que la trajectoire des plateaux (10) dudit transporteur (18) chevauche la face de support du plateau tournant.

2. Four selon la revendication 1, caractérisé en ce que les plateaux (10) du transporteur (18) ont une forme en profil de section sensiblement concave, le côté concave étant tourné vers le sens de déplacement du transporteur (18), et sont conçus pour venir en contact avec un plat de cuisson (6) suivant sa circonférence.

3. Four selon la revendication 2, caractérisé en ce que lesdits plateaux (10) ont une structure sensiblement en forme de barre munie à une extrémité d'un pied (10a) par lequel ils peuvent être fixés au transporteur, et à l'autre extrémité d'une section incurvée (10b) dans le sens de déplacement du transporteur.

4. Four selon la revendication 1, caractérisé en ce que ledit plateau tournant comprend un disque (15) supporté en rotation dans ladite zone de chargement (13) et définissant ladite face de support, et un élément formant noyau (16) monté de manière amovible en position centrale sur ledit disque (15) et comportant une pluralité de parties relevées (17), ledit élément formant noyau (16) constituant sensiblement un gabarit pour positionner sur ledit disque (15) une pluralité correspondante de plats de cuisson (6).

**Patentansprüche**

1. Elektroofen (1), zum kontinuierlichen Backen von in Backformen (6) liegenden Pizzas (5), bestehend aus einer Backkammer (3), die durch eine einzige Ofenöffnung (4) zugängig ist, aus einem angetriebenen endlosen Förderer, der außerhalb des Ofens (1) in einem Beladebereich für die zu backenden Pizzas und in einer Entladezone für die gebackenen Pizzas zugängig ist, wobei der Förderer (18) horizontale und die Backformen mitnehmende Tabletts (10) und koplanare, horizontale Trums (7a, 7b) besitzt, die sich in der Backkammer (3) längs erstrecken und wobei sich eine horizontale, die Backformen tragende Laufbahn (12) unterhalb der Tabletts (10) des Förderers (8) längs in der Backkammer (3) erstreckt, dadurch gekennzeichnet, daß der Förderer zum Fördern einer Mehrzahl von jeweils in Backformen (6) liegenden Pizzas in die Backkammer (3) hinein und wieder heraus aus dieser vorgesehen ist, und daß die Laufbahn Endbereiche aufweist, die sich durch die einzige Ofenöffnung (4) aus der Backkammer heraus erstrecken, wobei diese Endbereiche jeweils die Pizza (5) Beladungs- (13) und Entladungsbereiche (14) bilden und ein Drehtisch koplanar mit der Laufbahn (12) vorgesehen ist, der im Beladebereich (13) in einer Lage so angeordnet ist, daß die Bewegungsbahn der Tabletts (10) des Förderers (18) die Tragfläche des Drehtisches überlappt.

2. Ofen nach Anspruch 1, dadurch gekennzeichnet, daß die Tabletts (10) des Förderers (18) eine im wesentlichen konkave Querschnittsform aufweisen, wobei die konkave Seite in der Laufrichtung des Förderers (18) weist und geeignet ist, eine Backform (6) am Umfang zu erfassen.

3. Ofen nach Anspruch 2, dadurch gekennzeichnet, daß die Tabletts (10) im wesentlichen eine stangenförmige Struktur aufweisen, die an einem Ende mit einem Fuß (10a) versehen ist, mit dem sie an dem Förderer befestigt werden können und am anderen Ende mit einem in der Laufrichtung des Förderers gebogenen Bereich (10b) versehen sind.

4. Ofen nach Anspruch 1, dadurch gekennzeichnet, daß der Drehtisch eine Scheibe (15) aufweist, die drehbar im Beladebereich (13) gelagert ist und die Tragfläche bildet, und daß an einer zentralen Stelle dieser Scheibe (15) ein Kernstück (16) abnehmbar befestigt ist, das mit einer Mehrzahl von nach oben stehenden Teilen (17) versehen ist, wobei dieses Kernstück (16) im wesentlichen ein Formstück zur Anordnung einer entsprechenden Mehrzahl von Backformen (6) auf der Scheibe (15) bildet.

EP 0 338 995 B1